# EUROPEAN PATENT APPLICATION

(11) **EP 1 768 302 A1**
(43) Date of publication of application: **28.03.2007**
(21) Application number: 05740980.7
(22) Date of filing: 16.05.2005
(51) Int. Cl.: H04L 9/14

(54) **DATA INSPECTION DEVICE, DATA INSPECTION METHOD, AND DATA INSPECTION PROGRAM**

(30) Priority: 28.05.2004 JP 2004159986
(71) Applicant: SONY CORPORATION, Tokyo, Tokyo 141-0001 (JP)
(72) Inventor: TAKAHASHI, Kazuyoshi, Sony Corporation, Tokyo (JP)
(74) Representative: Melzer, Wolfgang
(86) International application number: PCT/JP2005/009289
(87) International publication number: WO 2005/117333

(57) **Abstract**

Inspection data 30 can be inspected by comparing reference data and the decrypted inspection data 30 (ST304) and, for example, after the inspection, individual data are encrypted according to their respective levels of secrecy (ST306) and are stored in flash ROMs 5, 6 and 7 (ST306), so that data of high level of secrecy can be prevented from being leaked out and data can be efficiently protected and stored. In addition, there is a case where when the protection level increases, the processing speed required for encryption increases, causing an increase in cost, but since the inspection data 30 is encrypted and stored according to its level of secrecy (ST305), cost reduction can be promoted compared to the case where all data are set to protection level 3. Accordingly, it is possible to provide a data inspection apparatus, a data inspection method and a data inspection program all of which are capable of preventing leak of information.

## Description

### Technical Field

The present The present invention relates to a data inspection apparatus for, a data inspection method of, and a data inspection program for inspecting the presence or absence of errors or the like in data recorded on a recording medium, while protecting the recorded data.

### Background Art

Conventionally, techniques for protecting information according to the level of security have heretofore been disclosed. For example, a secure system has been disclosed which stores or transmits files and data in encrypted forms in order to prevent leak of files and data important to computers. This system determines an encryption level according to the level of secrecy of information and encrypts a file in accordance with the determined encryption level, thereby performing optimum level of secrecy control (refer to, for example, Japanese Patent Publication Number 3453842 (Paragraphs [0032] and [0033], Fig. 1)).

In the case of optical disks such as CDs (Compact Disks) and DVDs (Digital Versatile Discs), measures, such as performing data protection processing such as encryption on content data and recording the processed content data on an optical disk, have been adopted in order to cope with copyright infringements such as illegal copies and pirated manufacturing.

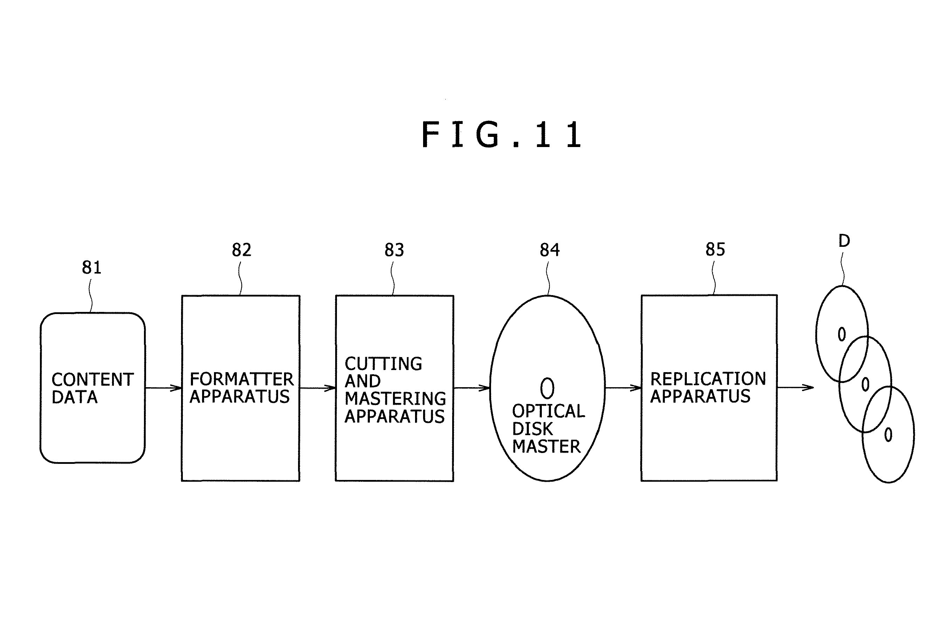

A general manufacturing process for an optical disk D will be described below with reference to Fig. 11. First, content data 81 which has been created in a studio or the like is converted into a prescribed format for the optical disk D by a formatter apparatus 82, thereby generating recording signals. The signals are written to produce an optical disk master 84, by a cutting and mastering apparatus 83. Furthermore, a plurality of optical disks D are produced from the optical disk master 84 by a replication apparatus 85.

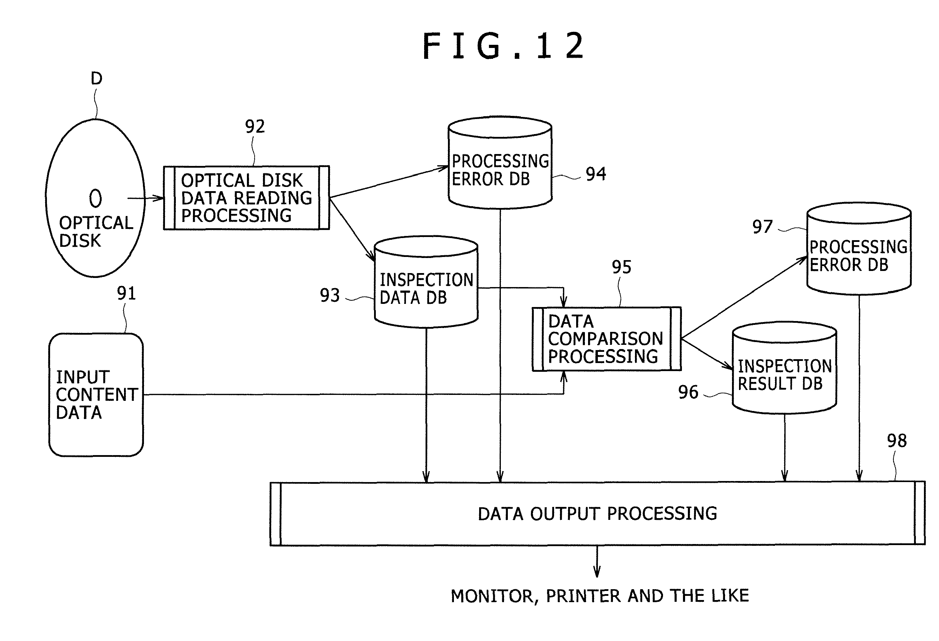

A data inspection apparatus is used for inspecting whether or not the content data is correctly recorded on these produced optical disks D. This inspection is performed along a data inspection processing flow as shown in Fig. 12. First, the data inspection apparatus performs optical disk data reading processing 92 for reading data from the optical disk D, and stores the read data in an inspection data DB (Database) 93. Then, data comparison processing 95 is performed by using original input content data 91 which has been created in a studio and is input data to the formatter apparatus 82, and the inspection data stored in the inspection data DB 93, and the result is stored in an inspection result DB 96. In addition, error information during the processing such as the optical disk data reading processing 92 and the data comparison processing 95 is stored in processing error DBs 94 and 97. These stored data are totalized and processed into a desired format by data output processing 98, and the obtained data is displayed on a monitor or outputted to a printer.

### Disclosure of the Invention

However, in the case of inspection of the data of such a copyright-protected secure optical disk D, the inspection shown in Fig. 12 has an issue that if an encryption key or the like for protection of the data of the optical disk D is leaked out to a storage such as the inspection data DB 93 or the inspection result DB 96, data which is the cause of an infringement of the copyright of the optical disk D becomes contained in the storage, so that such data can be easily extracted from the inspection data DB 93 and the inspection result DB 96 of the data inspection apparatus.

In view of the foregoing, an object of the present invention is to provide a data inspection apparatus, a data inspection method and a data inspection program all of which are capable of preventing leak of information.

To achieve the above object, a data inspection apparatus according to the present invention includes first reading means for reading encrypted content data and key data for decryption of the encrypted content data from a recording medium on which at least both the data are recorded, first decryption means for decrypting the read content data by using the read key data, means for reading unencrypted content data and comparing the decrypted content data and the unencrypted content data in order to at least detect errors in the decrypted content data, means for generating data representative of a result of the comparison, first storage means for storing information representative of a level of secrecy of the decrypted content data and information representative of a level of secrecy of the generated comparison result data in such a manner as to associate the respective levels of secrecy with the decrypted content data and the comparison result data, and means for encrypting the decrypted content data and the comparison result data according to the respective levels of secrecy.

In accordance with the present invention, the content data can be inspected by comparing the decrypted content data and the unencrypted content data and, for example, after the inspection, the decrypted content data and the comparison result data are encrypted and stored according to their respective levels of secrecy, so that data of high level of secrecy can be prevented from being leaked out during the inspection. The recording medium includes, but not limited to, an optical disk or the like, a magnetooptical disk, or other portable recording media. The unencrypted content data may read from, for example, a recording medium other than the recording medium on which at least the encrypted content data and the key data are recorded. This recording medium may be, for example, a portable recording medium or a recording medium connected to the data inspection apparatus via a network.

In accordance with one aspect of the present invention, a master disk key for encryption of the key data and key data encrypted by the master key data are recorded on the recording medium, and the data inspection apparatus further includes second reading means for reading the master key data, and second decryption means for decrypting the encrypted key data by using the read master key data. In accordance with this construction, if the master key data is read by the second reading means and the encrypted key data is not decrypted by the master key data, the content data cannot be obtained. Accordingly, the content data can be far more securely protected.

In accordance with one aspect of the present invention, the recording medium is an optical disk which has a row of pits along which the encrypted content data or the key data are recorded, and on which the master key data is recorded by using a wobble of the row of pits, and the second reading means has means for reading the master key data from the wobble signal. In accordance with this construction, since the master key data cannot be read by the first reading means, the master key data can be far more securely protected.

In accordance with one aspect of the present invention, the data inspection apparatus further includes second storage means for storing information representative of an authority level of a user who is to access either of the encrypted content data or the comparison result data through the data inspection apparatus, in such a manner as to associate the information with either of the content data encrypt by the encryption means or the comparison result data, and means for determining data to be decrypted from between the encrypted content data and the comparison result data, according to the authority level information. In accordance with this construction, information can be securely provided according to the information representative of the authority level. The term "access" used herein indicates that the user operates the data inspection apparatus so as to recognize the content data or the comparison result data.

In accordance with one aspect of the present invention, the data inspection apparatus includes a storage device for storing at least the master key data, an accommodation container with a lid for accommodating the storage device, and means for monitoring a state of closure of the lid. In accordance with this construction, since the master key data stored in the storage device can be erased, for example, when the lid is opened, the security of the master key data can be increased to a further extent.

A data inspectionmethod according to the present invention includes a step of reading encrypted content data and key data for decryption of the encrypted content data from a recording medium on which at least both the data are recorded, a step of decrypting the read content data by using the read key data, a step of reading unencrypted content data and comparing the decrypted content data and the unencrypted content data in order to at least detect errors in the decrypted content data, a step of generating data representative of a result of the comparison, a step of storing information representative of a level of secrecy of the decrypted content data and information representative of a level of secrecy of the generated comparison result data in such a manner as to associate the respective levels of secrecy with the decrypted content data and the comparison result data, and a step of encrypting the decrypted content data and the comparison result data according to the respective levels of secrecy.

In accordance with the present invention, the content data can be inspected by comparing the decrypted content data and the unencrypted content data and, for example, after the inspection, the decrypted content data and the comparison result data are encrypted and stored according to their respective levels of secrecy, so that data of high level of secrecy can be prevented from being leaked out during the inspection. The recording medium includes, but not limited to, an optical disk or the like, a magnetooptical disk, or other portable recording media. The unencrypted content data may read from, for example, a recording medium other than the recording medium on which at least the encrypted content data and the key data are recorded. This recording medium may be, for example, a portable recording medium or a recording medium connected to the data inspection apparatus via a network.

A data inspection program according to the present invention causes a computer to execute a step of reading encrypted content data and key data for decryption of the encrypted content data from a recording medium on which at least both the data are recorded, a step of decrypting the read content data by using the read key data, a step of reading unencrypted content data and comparing the decrypted content data and the unencrypted content data in order to at least detect errors in the decrypted content data, a step of generating data representative of a result of the comparison, a step of storing information representative of a level of secrecy of the decrypted content data and information representative of a level of secrecy of the generated comparison result data in such a manner as to associate the respective levels of secrecy with the decrypted content data and the comparison result data, and a step of encrypting the decrypted content data and the comparison result data according to the respective levels of secrecy.

In accordance with the present invention, the content data can be inspected by comparing the decrypted content data and the unencrypted content data and, for example, after the inspection, the decrypted content data and the comparison result data are encrypted and stored according to their respective levels of secrecy, so that data of high level of secrecy can be prevented from being leaked out during the inspection.

### Brief Description of Drawings

Fig. 1 is a block diagram showing a data inspection apparatus according to a first embodiment of the present invention;
Fig. 2 is a diagram showing various programs stored in the data inspection apparatus according to the first embodiment;
Fig. 3 is a flowchart of writing data inspected by the data inspection apparatus to an optical disk;
Fig. 4 is a flowchart for explaining the operation of the data inspection apparatus according to the first embodiment;
Fig. 5 is a flowchart of reading data from the optical disk, showing step 303 of Fig. 4;
Fig. 6 is a flowchart for explaining details of the flowchart shown in Fig. 4;
Fig. 7 is a flowchart showing authority level decision processing for determining the authority level of a user of the data inspection apparatus;
Fig. 8 is, Fig. 8 is, a diagram showing a protection level table;
Fig. 9 is a flowchart for explaining details of the flowchart shown in Fig. 7;
Fig. 10 is a block diagram showing a data inspection apparatus according to a second embodiment of the present invention;
Fig. 11 is an explanatory view showing a conventional manufacturing process for optical disks; and
Fig. 12 is a flowchart of conventional data inspection for the optical disk.

### Best Mode for Carrying out the Invention

Embodiments of the present invention will be described below with reference to the accompanying drawings.

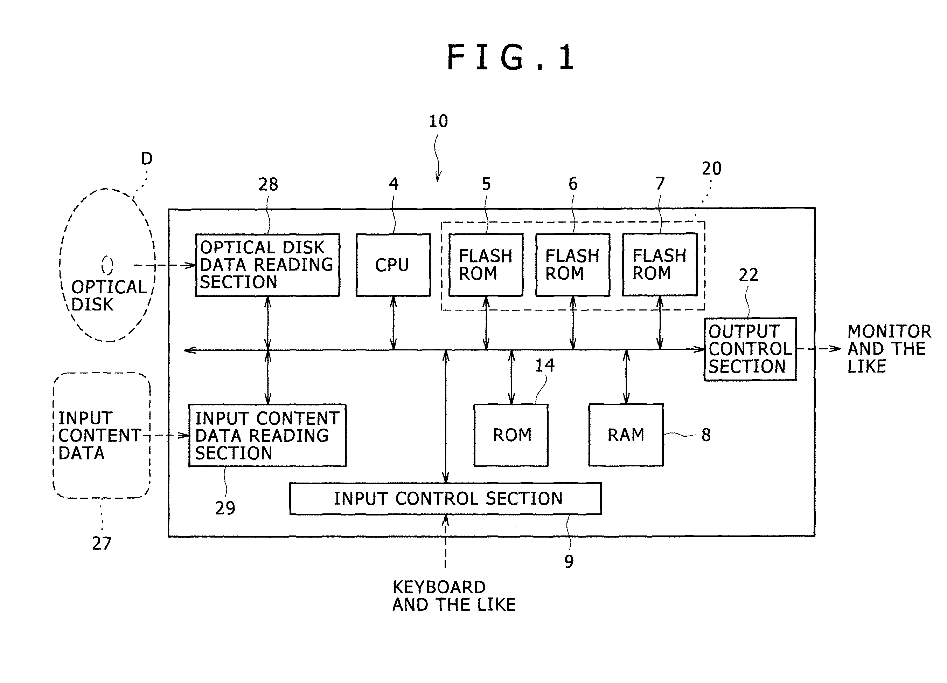

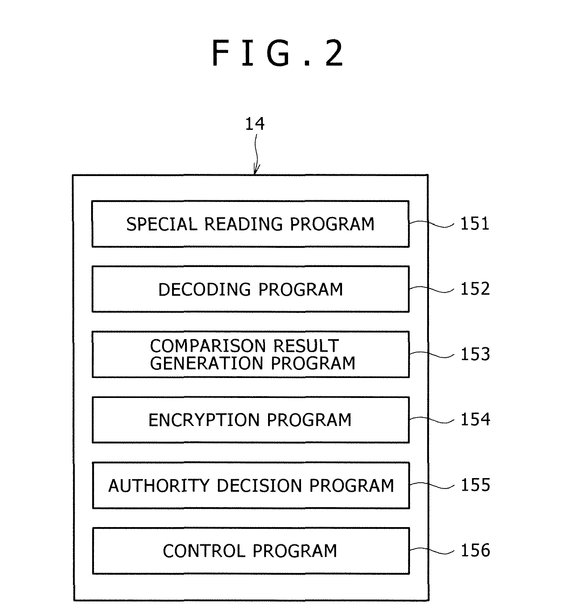

Fig. 1 is a block diagram showing a data inspection apparatus according to a first embodiment of the present invention, and Fig. 2 is a diagram showing various programs stored in the data inspection apparatus.

A data inspection apparatus 10 according to the present embodiment is used for inspecting data stored on an optical disk D, and is constructed in such a manner that an optical disk reading section 28, an input content data reading section 29, a CPU (Central Processing Unit) 4, a ROM (Read Only Memory) 14, a RAM (Random Access Memory) 8, an inspection data DB (Database) 20, an input control section 9, and an output control section 22 are connected to one another via an internal bus.

The optical disk reading section 28 is made of, for example, an optical pickup, and is used for reading inspection data which is an inspection target stored on the optical disk D.

The input content data reading section 29 is used for reading original input content data 27 which has been created in, for example, a studio outside the data inspection apparatus 10. The read input content data 27 becomes reference data for inspection.

The input control section 9 is connected to an input device such as a keyboard via, for example, a USB (Universal Serial Bus) cable.

As shown in Fig . 2, a special reading program 151, a decryption program 152, a comparison result generation program 153, an encryption program 154, an authority decision program 155, and the like are stored in the ROM 14.

The special reading program 151 is used for reading data of the highest level of secrecy stored on the optical disk D, by means of the optical disk reading section 28. The data of the highest level of secrecy is stored by using the wobble of a row of pits formed on the optical disk D in advance, so as not to be read with an ATAPI command or the like which is a general read command.

The decryption program 152 is used for decrypting according to the level of secrecy the data read by the optical disk reading section 28 and acquiring inspection data.

The comparison result generation program 153 is used for generating comparison result data by comparing the reference data read by the input content data reading section 29 with the inspection data decrypted by the decryption program 152. At this time, the comparison of the data is performed on a one to one basis for each of files which constitute the respective data. The comparison result data contains, for example, data indicating whether the compared inspection data are the same as well as data indicating which of the inspection data differs.

The encryption program 154 is used for encrypting the reference data, the decrypted inspection data and the comparison result data according to the level of secrecy. The algorithm of each of the encryption program 154 and the decryption program 152 uses, for example, DES (Data Encryption Standard) or AES (Advanced Encryption Standard).

The authority decision program 155 is used for determining the authority level of a user, such as a manager of a manufacturer or a manager of a manufacturing plant, who is to access the data inspection apparatus 10, on the basis of authority level data with which the user is to access from the input device, such as a keyboard, outside the data inspection apparatus 10. Data that is allowed to be acquired by each user, for example, a manager of a manufacturer and a manager of a manufacturing plant, is restricted by this program.

The CPU 4 controls the entire data inspection apparatus 10 by using a control program 156 stored in the ROM 14. At this time, the RAM 8 is used as a work area.

The inspection data DB 20 is made of, for example, flash ROMs 5, 6 and 7. In addition, the inspection data DB 20 is not limited to the flash ROMs, and may also use, for example, an EPROM (Erasable Programmable Read Only Memory) or a hard disk which is of an erasable and writable type. The flash ROMs 5, 6 and 7 are used for storing individual data encrypted by the encryption program 154 according to their respective levels of secrecy. In order to protect and store data of the highest level of secrecy (of protection level 3), the flash ROM 7, for example, is constructed to be able to prevent data from being leaked out, unlike a general hard disk drive. For example, data encrypted by AES is stored in the flash ROM 7 by using a wobble signal of the optical disk D. Furthermore, the CPU 4 is set to automatically issue a command to erase the data in the flash ROM 7, for example, when the power of the data inspection apparatus 10 is turned off. This mechanism for preventing leak of data is not limitative, and the flash ROM 7 may also be set not to allow copying with a general copy command to copy data from the flash ROM 7.

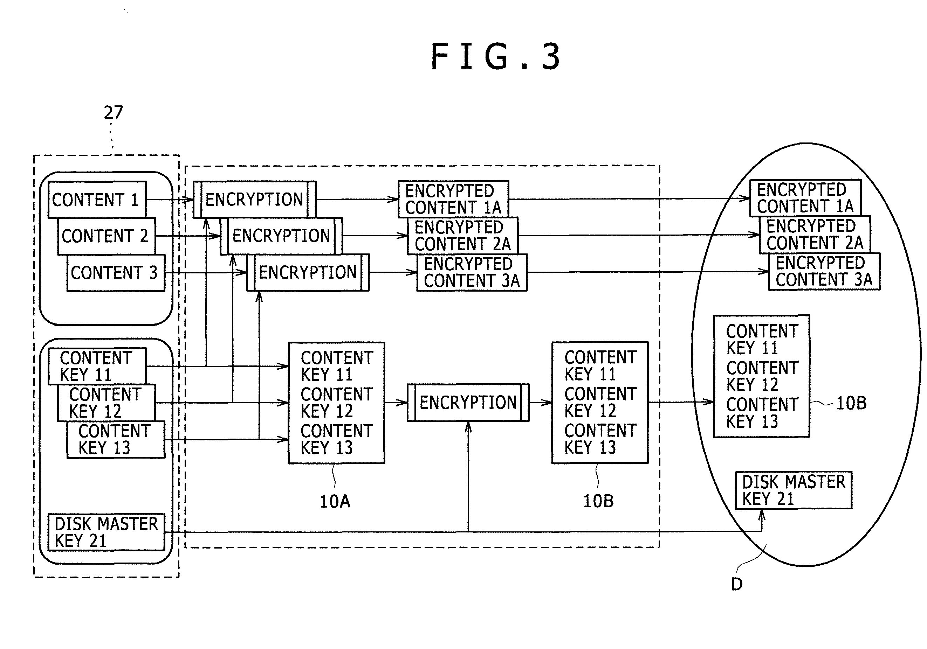

As shown in Fig. 3, the input content data 27 contains, for example, the data of contents 1, 2 and 3, the data of content keys 11, 12 and 13 for encryption of the contents 1, 2 and 3, and the data of a disk master key 21 for encryption of a key locker 10A in which the content keys 11, 12 and 13 are combined into one. The content 1 and the like contain, for example, an index file and a stream file. In the case of audio data, the respective contents 1, 2 and 3 correspond to pieces of music. In addition, the input content data 27 is not limited to audio data, and may also be other data such as documents, drawings and programs. In addition, although reference has been made to an example in which the number of contents is three, the number of contents is not limitative.

The input content data 27 is stored on the optical disk D according to the data writing flowchart shown in Fig. 3. The contents 1, 2 and 3 are respectively encrypted by the content keys 11, 12 and 13 for encryption of the contents 1, 2 and 3, and are respectively stored on the optical disk D as encrypted contents 1A, 2Aand 3A. The content keys 11, 12 and 13 are combined and grouped into one piece of data in the key locker 10A, and the key locker 10A is encrypted by the disk master key 21 for encryption of the key locker 10A and is stored on the optical disk D as an encryption key locker 10B. The disk master key 21 is not encrypted, and is stored on the optical disk D so as not to be read with a general read command, by using the wobble of a row of pits on the optical disk D. The content keys 11, 12 and 13, the disk master key 21 and the like are supplied from a key distribution center provided outside a manufacturing process for the optical disk D, or are supplied as random numbers or the like generated by a formatter apparatus 82.

Inspection result data and processing error data and the like to be handled by users are set to protection level 1 because their levels of secrecy are comparatively low. The content 1, the content key 11 and the like are set to protection level 2 because they are higher in level of secrecy than the data of protection level 1. The disk master key 21 is set to protection level 3 because it is important data of the highest level of secrecy which is the cause of leak of all data such as the content 1.

The output control section 22 is connected via an external bus to an output device, such as a monitor, which is not shown. The output control section 22 is used for controlling signals to the monitor and the like.

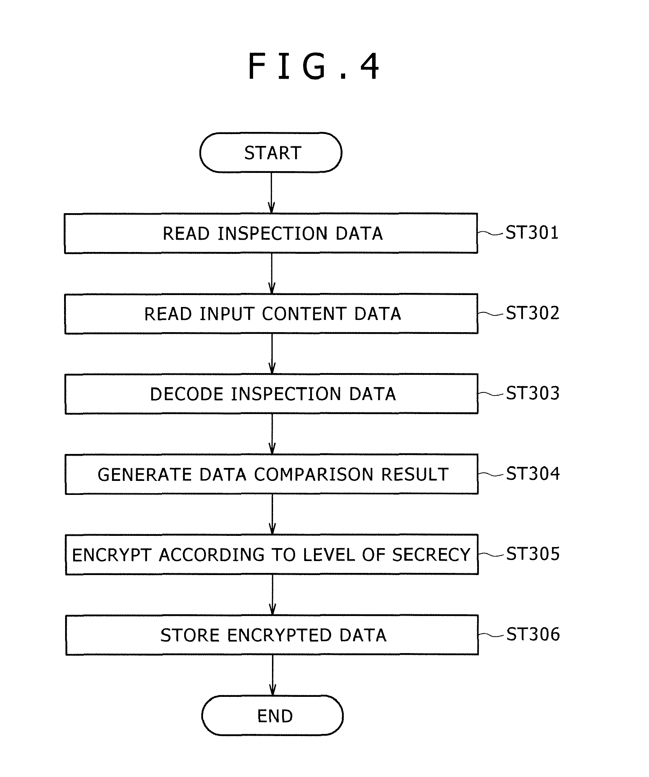

The operation of the data inspection apparatus 10 will be described below with reference to Figs. 4 to 8.

When the optical disk D is set in the optical disk reading section 28 and, for example, an inspection start button which is not shown is depressed, the processing shown in Fig. 4 is executed. The setting of the optical disk D in the data inspection apparatus 10, the depression of the search start button and the like may be performed by a user' s manual operation. These operations may, of course, be automated.

In step 301, the CPU 4 reads through the optical disk reading section 28 the encrypted content 1A, the encryption key locker 10B, the disk master key 21 and the like which are stored on the optical disk D, and stores the read data in the RAM 8, for example. At this time, the CPU 4 reads the disk master key 21 stored by using a wobble on the optical disk D, by means of the special reading program 151.

In step 302, the CPU 4 reads the input content data 27 created in a studio or the like through the input content data reading section 29, and stores the read data in the RAM 8, for example.

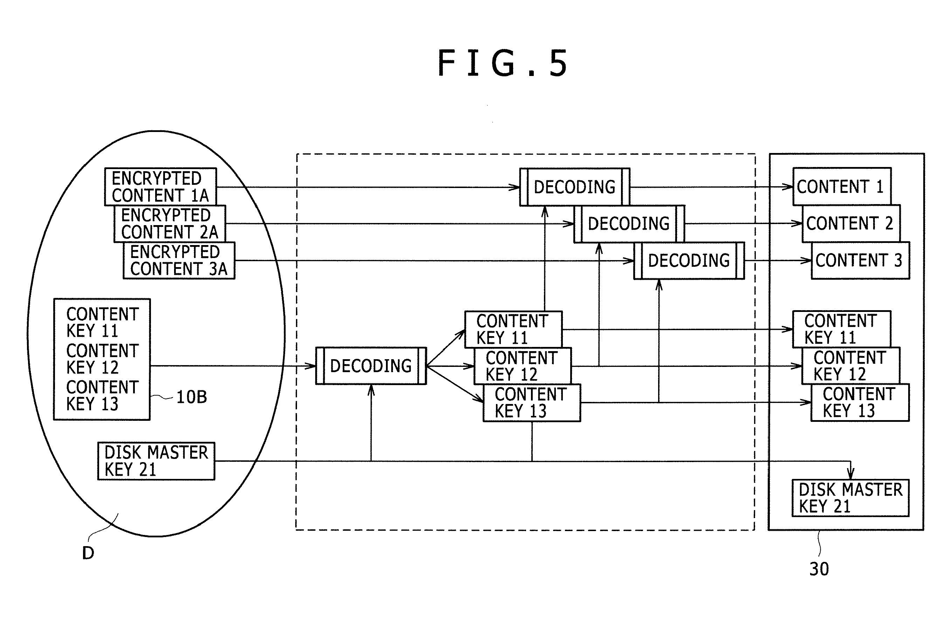

In step 303, the CPU 4 decrypts the content 1A, the encryption key locker 10B and the like which have been read by the optical disk reading section 28, according to their respective levels of secrecy in accidence with the flowchart shown in Fig. 5 by using the decryption program 152.

Namely, as shown in Fig. 5, the CPU 4 decrypts the encryption key locker 10B and generates the content keys 11, 12 and 13 by using the disk master key 21, decrypts the encrypted contents 1A, 2A and 3A and generates the contents 1, 2 and 3 by using the content keys 11, 12 and 13, and decrypts inspection data 30 such as the content 1, the content key 11 and the disk master key 21.

In step 304, in order to detect errors in the content 1, the CPU 4 compares the input content data 27 with the decrypted content 1, the content key 11, the disk master key 21 and the like and generates inspection result data 51 by using the comparison result generation program 153, and stores the inspection result data 51 in the RAM 8.

In step 305, the CPU 4 performs encryption processings 501, 502 and 503 for encrypting the input content data 27, the decrypted content 1, the content key 11, the disk master key 21 and the like as well as the inspection result data 51 by using the encryption program 154 at protection levels 1, 2 and 3 corresponding to their respective levels of secrecy.

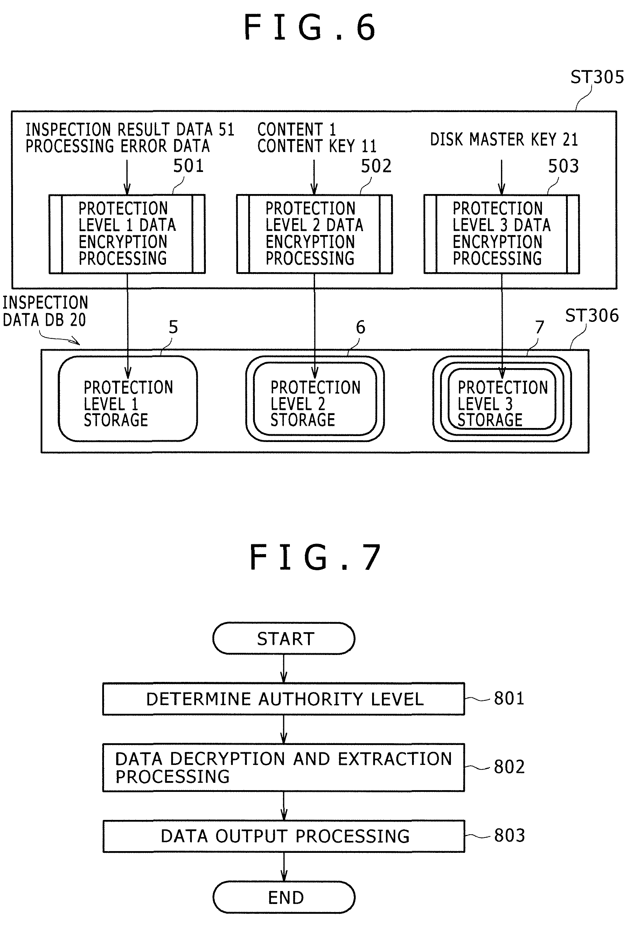

As shown in Fig. 6, in the protection level 1 encryption processing 501, the CPU 4 encrypts the inspection result data 51 and the like of protection level 1 by using a DES encryption program 52. In the protection level 2 encryption processing 502, the CPU 4 encrypts the content 1 and the like of protection level 2 by using an AES encryption program. In the protection level 3 encryption processing 503, the CPU 4 encrypts the disk master key 21 of protection level 3 by using an AES encryption program. At this time, from among the files contained in the content 1 and the like, a stream file, for example, is encrypted.

In step 306, the data of protection levels 1, 2 and 3 that have been encrypted in step 305 are respectively stored into the flash ROMs 5, 6 and 7 which are respectively storages with protection levels 1, 2 and 3. At this time, the CPU 4 issues a special write request for storing data by using a wobble on the optical disk D, and stores the data of protection level 3.

Fig. 7 is a flowchart showing authority level decision processing for determining the authority level of a user of the data inspection apparatus. In accordance with the flowchart, the authority level of the user is determined and the user's access to the data inspection apparatus 10 is restricted.

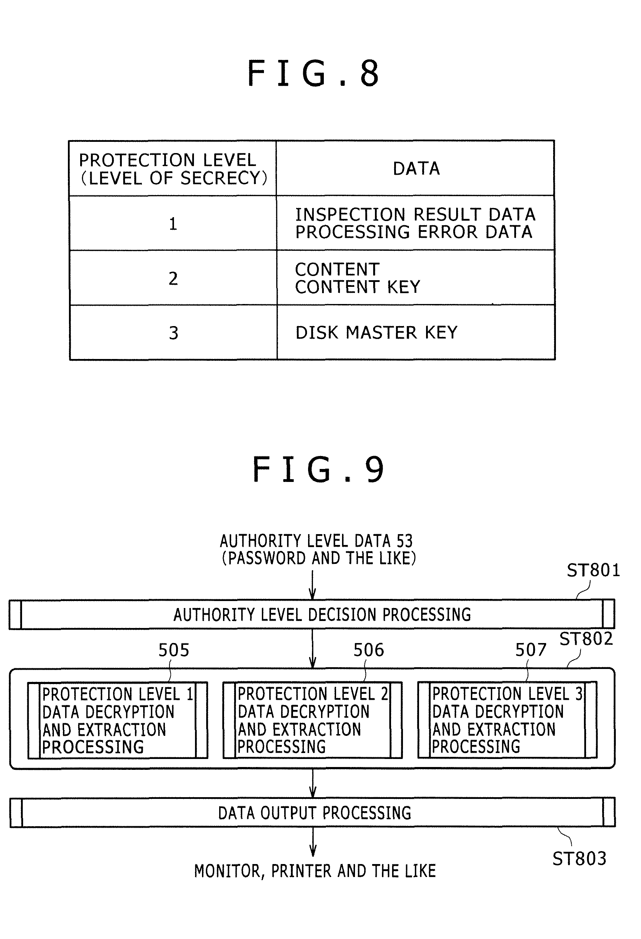

As shown in Fig. 7, in step 801, it is determined which authority level corresponds to authority level data 53 such as a password or an identification number which has been inputted to the data inspection apparatus 10 by using a smart card, a keyboard or the like. At this time, a table is used which is stored in the ROM 14 or other storage devices and in which passwords and the like are associated with authority levels. The content of this table may also be updatable as needed. As shown on the protection level of Fig. 8 by way of example, protection level 1 which is level-of-secrecy information is associated with, for example, the inspection result data and is stored in step 301 shown in Fig. 4. Similarly, protection level 2 and protection level 3 are respectively associated with the contents and the content keys and with the disk master key, and are stored in step 301 shown in Fig. 4.

In step 802, the CPU 4 performs protection level 1, 2 and 3 data decryption and extraction processings 505, 506 and 507 shown in Fig. 6 according to the authority level determined in step 801. For example, in the protection level 2 data decryption and extraction processing 506, the CPU 4 reads data of protection level 2 and decrypts the read data by using a decryption program (AES). In this manner, the CPU 4 decrypts data of not higher than the same level as the authority level. For example, in the case of protection level 1 and authority level 1, the CPU 4 decrypts data of protection level 1, and in the case of protection level 3 and authority level 2, the CPU 4 decrypts data of protection level 2.

In step 803, the CPU 4 performs data output processing to process the data decrypted in step 802 into an arbitrary format and output the processed data to the output device such as a monitor to cause it to display the data.

In the present embodiment, the inspection data 30 can be inspected by comparing the reference data and the decrypted inspection data 30 (ST304), and after the inspection, for example, individual data are encrypted according to their respective levels of secrecy (ST306) and are stored in the flash ROMs 5, 6 and 7 (ST306), so that data of high level of secrecy can be prevented from being leaked out and data can be efficiently protected and stored. In addition, there is a case where when the protection level increases, the processing speed required for encryption increases, causing an increase in cost, but since the inspection data 30 is encrypted and stored according to its level of secrecy (ST305), cost reduction can be promoted compared to the case where all data are set to protection level 3.

In the present embodiment, the CPU 4 uses the decryption program 152 to decrypt the encryption key locker 10B by means of the disk master key 21 and decrypt the content 1A and the like by means of the content key 11 and the like. For this reason, even if the encryption key locker 10B is leaked out, the content 1A and the like cannot be decrypted, and in addition, the disk master key 21 is needed. Accordingly, data can be prevented from being easily leaked out.

In the present embodiment, the authority level is determined on the basis of the authority level data 53 that has been inputted from an input device or the like outside the data inspection apparatus 10, and data to be decrypted is determined fromamong the decrypted reference data, the decrypted inspection data and the decrypted inspection result data 51 (ST802). Accordingly, the data can be securely provided according to the authority level data 53 that has been inputted from the outside, and can be securely protected.

In the present embodiment, the disk master key 21 for protection level 3 which is of the highest level of secrecy is stored on the optical disk D by using the wobble of a row of pits on the optical disk D. Accordingly, the disk master key 21 cannot be read with a general optical pickup.

In the present embodiment, inspection data that has temporarily been encrypted for inspection is decrypted and stored in the flash ROMs 5, 6 and 7. Accordingly, data can be securely managed.

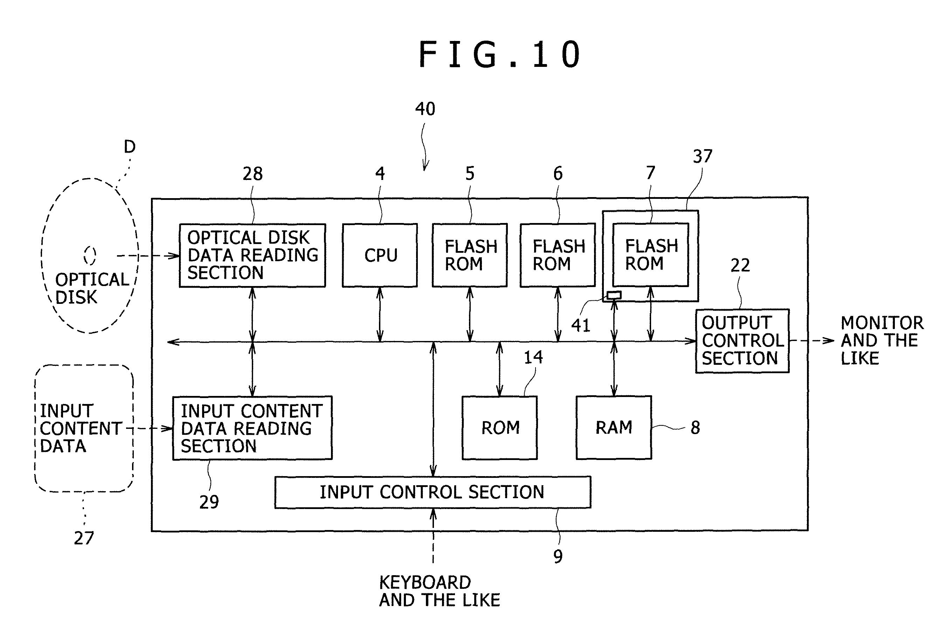

Fig. 10 is a block diagram showing a data inspection apparatus according to a second embodiment of the present invention.

In the present embodiment, a data inspection apparatus 40 includes the flash ROM 7 accommodated in an opening-proof container 37. The opening-proof container 37 has a lid, and a sensor 41 for monitoring and detecting the state of closure of this lid is provided in the opening-proof container 37. The sensor 41 is connected to the CPU 4 via the internal bus, and the CPU 4 is constructed so that, for example, when the lid is opened, the CPU 4 receives a signal from the sensor 41 and issues a command to erase the data stored in the flash ROMs 5, 6 and 7.

In the present embodiment, the CPU 4 can erase the data stored in the flash ROMs 5, 6 and 7, for example, when the lid of the opening-proof container 37 is opened. Accordingly, the data can be far more securely prevented from being leaked out of the data inspection apparatus 40.

The present invention is not limited to either of the above-mentioned embodiments, and can be modified in various ways.

In the above description of the embodiments, reference has been made to the example in which the disk master key 21 is stored so as not to be read with a general optical pickup, by using the wobble of a row of pits or the like on the optical disk D. However, this example is not limitative, and the construction may be modified so that a command program using complex software, for example, is needed for the reading of data from the optical disk D. This construction can similarly prevent leak of data from the optical disk D.

In the above description of the embodiments, reference has been made to the example in which the encryption key locker 10B and the disk master key 21 are used to engage a double lock. However, the number of keys may be increased so that data can be far more securely protected.

In the above description of the embodiments, reference has been made to the example in which the input content data 27 that has been read by the input content data reading section 29 is data that is decrypted in advance. However, the construction may be modified so that encrypted data is read by the input content data reading section and is similarly decrypted into reference data.

In the above description of the embodiments, reference has been made to the example in which the inspection data and the like are read in step 301, the reference data is read in step 302, and the inspection data is decrypted in step 303. However, the order of steps 301 and 302 may be reversed, or these processings may be joined so that, for example, the disk master key 21 and the encryption key locker 10B are decrypted immediately after having been read, and subsequently, the encrypted content 1A and the like are read. In this manner as well, the encrypted content 1A and the like can be similarly decrypted.

In the above description of the embodiments, reference has been made to the example in which each data decrypted in step 303 and the reference data are compared to generate an inspection result. However, the construction may be modified so that the input content data 27 encrypted in step 301 is read and the encrypted data and the unencrypted data read by the optical disk reading section 28 in step 301 are compared to generate a comparison result, and the comparison result is stored as comparison result data. Far more accurate inspection can be performed with the comparison result data.

In the above description of the embodiments, reference has been made to the example in which, for example, a stream file is encrypted from among the files contained in the content 1 and the like. However, in order to increase the security of encryption, it is preferable to encrypt, for example, all files contained in the content 1 and the like.

In the above description of the second embodiment, reference has been made to the example in which the flash ROM 7 is accommodated in the opening-proof container 37. However, the flash ROMs 5, 6 and 7 may also be accommodated in the opening-proof container.

In the above description of the second embodiment, reference has been made to the example in which, for example, when the lid of the opening-proof container 37 is opened, the CPU 4 erases the data stored in the flash ROMs 5, 6 and 7 . However, this construction is not limitative, and a similar effect can be obtained in such a manner that, for example, when the power of the data inspection apparatus 40 is turned off, the data stored in the flash ROMs 5, 6 and 7 are erased or changed by using current stored in a capacitor or the like which is not shown.

### Industrial Applicability

As described above, according to the present invention, it is possible to inspect content data, and since decrypted content data and comparison result data are encrypted and stored according to their respective levels of secrecy after inspection, it is possible to prevent data of high level of secrecy from being leaked out during the inspection.

## Claims

1. A data inspection apparatus **characterized by** comprising:
first reading means for reading encrypted content data and key data for decryption of the encrypted content data from a recording medium on which at least both the data are recorded;
first decryption means for decrypting the read content data by using the read key data;
means for reading unencrypted content data and comparing the decrypted content data and the unencrypted content data in order to at least detect errors in the decrypted content data;
means for generating data representative of a result of the comparison;
first storage means for storing information representative of a level of secrecy of the decrypted content data and information representative of a level of secrecy of the generated comparison result data in such a manner as to associate the respective levels of secrecy with the decrypted content data and the comparison result data; and
means for encrypting the decrypted content data and the comparison result data according to the respective levels of secrecy.

2. A data inspection apparatus according to claim 1, **characterized in that**:
a master disk key for encryption of the key data and key data encrypted by the master key data are recorded on the recording medium,
the data inspection apparatus further comprising:
second reading means for reading the master key data; and
second decryption means for decrypting the encrypted key data by using the read master key data.

3. A data inspection apparatus according to claim 2, **characterized in that**:
the recording medium is an optical disk which has a row of pits along which the encrypted content data or the key data are recorded, and on which the master key data is recorded by using a wobble of the row of pits,
the second reading means having means for reading the master key data from the wobble signal.

4. A data inspection apparatus according to claim 1, **characterized by** further comprising:
second storage means for storing information representative of an authority level of a user who is to access either of the encrypted content data or the comparison result data through the data inspection apparatus, in such a manner as to associate the information with the either of the content data encrypt by the encryption means or the comparison result data; and
means for determining data to be decrypted from between the encrypted content data and the comparison result data, according to the authority level information.

5. A data inspection apparatus according to claim 1, **characterized by** further comprising:
a storage device for storing at least the master key data;
an accommodation container with a lid for accommodating the storage device; and
means for monitoring a state of closure of the lid.

6. A data inspection method **characterized by** comprising:
a step of reading encrypted content data and key data for decryption of the encrypted content data from a recording medium on which at least both the data are recorded;
a step of decrypting the read content data by using the read key data;
a step of reading unencrypted content data and comparing the decrypted content data and the unencrypted content data in order to at least detect errors in the decrypted content data;
a step of generating data representative of a result of the comparison;
a step of storing information representative of a level of secrecy of the decrypted content data and information representative of a level of secrecy of the generated comparison result data in such a manner as to associate the respective levels of secrecy with the decrypted content data and the comparison result data; and
a step of encrypting the decrypted content data and the comparison result data according to the respective levels of secrecy.

7. A data inspection program which causes a computer to execute:
a step of reading encrypted content data and key data for decryption of the encrypted content data from a recording medium on which at least both the data are recorded;
a step of decrypting the read content data by using the read key data;
a step of reading unencrypted content data and comparing the decrypted content data and the unencrypted content data in order to at least detect errors in the decrypted content data;
a step of generating data representative of a result of the comparison;
a step of storing information representative of a level of secrecy of the decrypted content data and information representative of a level of secrecy of the generated comparison result data in such a manner as to associate the respective levels of secrecy with the decrypted content data and the comparison result data; and
a step of encrypting the decrypted content data and the comparison result data according to the respective levels of secrecy.
